(19) **Europäisches Patentamt**
**European Patent Office**
**Office européen des brevets**

(11) **EP 1 999 899 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(21) Anmeldenummer: **07704171.3**

(22) Anmeldetag: **26.01.2007**

(51) Int Cl.:
**H04L 12/56** (2006.01)

(86) Internationale Anmeldenummer:
**PCT/EP2007/050781**

(87) Internationale Veröffentlichungsnummer:
**WO 2007/113022 (11.10.2007 Gazette 2007/41)**

(54) **VERFAHREN ZUR ERMITTLUNG EINES PFADDISTANZWERTES**

METHOD FOR DETERMINING A ROUTE DISTANCE VALUE

PROCÉDÉ POUR DÉTERMINER UNE VALEUR DE DISTANCE D'UNE VOIE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.03.2006 DE 102006014910**

(43) Veröffentlichungstag der Anmeldung:
**10.12.2008 Patentblatt 2008/50**

(73) Patentinhaber: **SIEMENS AKTIENGESELLSCHAFT**
**80333 München (DE)**

(72) Erfinder:
• **KUTSCHENREUTER, Matthias**
**80809 München (DE)**

• **SCHWINGENSCHLÖGL, Christian**
**85640 Putzbrunn (DE)**

(56) Entgegenhaltungen:
**EP-A- 1 617 608      US-A1- 2005 185 632**

• **DE COUTO D S J ET AL: "A HIGH-THROUGHPUT PATH METRIC FOR MULTI-HOP WIRELESS ROUTING" PROCEEDINGS OF THE 9TH. ANNUAL INTERNATIONAL CONFERENCE ON MOBILE COMPUTING AND NETWORKING. MOBICOM 2003. SAN DIEGO, CA, SEPT. 14 - 19, 2003, ANNUAL INTERNATIONAL CONFERENCE ON MOBILE COMPUTING AND NETWORKING, NEW YORK, NY : ACM, US, Bd. CONF. 9, 14. September 2003 (2003-09-14), Seiten 134-146, XP001186714 ISBN: 1-58113-753-2**

**Beschreibung**

Die Erfindung betrifft ein Verfahren zur Ermittlung eines Pfaddistanzwertes sowie einen Netzwerkknoten.

Ein Netzwerk ermöglicht das Übermitteln von Nachrichten zwischen seinen Knoten. In einem Netzwerk sind nicht alle Knoten des Netzwerks mit allen weiteren Knoten direkt verbunden. Eine Nachricht von einem sendenden Knoten zu einem empfangenden Knoten muss daher oftmals über einen oder mehrere Zwischenknoten weitergeleitet werden, um vom sendenden Knoten zum empfangenden Knoten zu gelangen. Der Weg vom sendenden Knoten über die Zwischenknoten zum empfangenden Knoten wird dabei als Pfad oder Route bezeichnet.

Um aus einer großen Menge von theoretisch möglichen Pfaden im Netzwerk für eine Nachricht einen geeigneten Pfad auszuwählen, kommt ein Routing-Verfahren zum Einsatz. Das Routing-Verfahren ermittelt zuerst wenigstens einen, zweckmäßig aber eine Mehrzahl von Pfadkandidaten, entlang derer die Nachricht übermittelt werden könnte. Im Folgenden wird den Pfadkandidaten jeweils ein Pfaddistanzwert, eine sog. Routen-Metrik, zugeordnet. Der Pfaddistanzwert ist ein Maß für die Qualität eines Pfadkandidaten. Der Pfaddistanzwert wiederum wird üblicherweise aus Linkdistanzwerten bestimmt, die wiederum ein Maß für die Qualität von einzelnen Links des jeweiligen Pfadkandidaten sind. Als Link wird hierbei die direkte Verbindung zweier Knoten des Netzwerks bezeichnet.

In den Pfaddistanzwert können beispielsweise Nutzungskosten für einen Link des Pfades oder die Anzahl der Links eines Pfades eingehen. Weiterhin ist es möglich, dass Werte für eine Übertragungsqualität entlang des Pfadkandidaten oder eines Links des Pfadkandidaten oder Werte für die Übertragungsgeschwindigkeit des Pfadkandidaten oder eines Links des Pfadkandidaten eingehen. Der Pfadkandidat mit dem optimalen Pfaddistanzwert wird in der Folge als Pfad ausgewählt. Die Nachricht kann nun entlang dieses Pfades übermittelt werden.

Die Verfahren zur Ermittlung des Pfaddistanzwertes werden als Routing-Metriken bezeichnet. Eine bekannte Routing-Metrik ist ETX (Expected Transmission Count). Mit der Routing-Metrik ETX wird derjenige Pfad ausgewählt, bei dem die zu erwartende Anzahl an Übertragungen am geringsten ist. Unter Übertragungen sind hierbei sowohl Erstübertragungen (Transmissions) als auch wiederholte Übertragungen (Retransmissions) zu verstehen. Eine erste Übertragung ist die Übertragung eines Pakets über einen Link. Eine wiederholte Übertragung findet statt, wenn die erste Übertragung nicht erfolgreich war. Die ersten Übertragungen und die wiederholten Übertragungen werden bei ETX gleich behandelt. Für die Routing-Metrik ETX siehe auch EP 1617608.

Wiederholte Übertragungen weisen jedoch den Nachteil auf, dass sie mehr Zeit erfordern können, als erste Übertragungen. Daher weist ETX den Nachteil auf, für bestimmte Arten von Datenübertragungen in bestimmten Szenarien nicht den optimalen Pfad zu ermitteln. Solche Datenübertragungen können beispielsweise Voice over IP (VoIP) oder Videotelefonie sein. Andere Beispiele für solche Arten von Datenübertragungen sind alle Arten von zeitkritischen Datenübertragungen.

Die der Erfindung zugrunde liegende Aufgabe ist es, ein Verfahren zur Ermittlung eines Pfaddistanzwertes sowie einen Netzwerkknoten anzugeben, die eine verbesserte Pfadauswahl für zeitkritische Datenübertragungen erlaubt bzw. durchführen kann.

Diese Aufgabe wird hinsichtlich des Verfahrens durch ein Verfahren gemäß Anspruch 1 und hinsichtlich des Netzwerkknotens durch einen Netzwerkknoten gemäß Anspruch 10 gelöst. Die weiteren Ansprüche betreffen bevorzugte Ausgestaltungen des Verfahrens und des Netzwerkknotens sowie ein auf dem erfindungsgemäßen Netzwerkknoten beruhendes Netzwerk.

Bei dem erfindungsgemäßen Verfahren zur Ermittlung eines Pfaddistanzwertes für einen Pfad wird der Pfaddistanzwert basierend auf einer ersten Wahrscheinlichkeit ermittelt. Die erste Wahrscheinlichkeit gibt die Wahrscheinlichkeit an, dass ein Datenpaket bei einer Übertragung entlang des Pfades bei wenigstens einem Link des Pfades mehrfach übertragen werden muss. Das bedeutet, dass die erste Wahrscheinlichkeit die Wahrscheinlichkeit angibt, dass bei wenigstens einem Link eine wiederholte Übertragung notwendig ist. Die mit dem Verfahren ermittelte Metrik weist den Vorteil auf, eine bessere Pfadauswahl zu ermöglichen für zeitkritische Datenübertragungen.

Es ist zweckmäßig, wenn bei dem Verfahren folgende Schritte durchgeführt werden:

- Ermittlung von jeweils einem in die erste Wahrscheinlichkeit eingehenden Linkdistanzwert für wenigstens einen Link des Pfades;
- Ermittlung des Pfaddistanzwertes aus dem Linkdistanzwert.

Zweckmäßig wird dabei für wenigstens zwei Links des Pfades, bevorzugt für jeden Link des Pfades, jeweils ein Linkdistanzwert ermittelt. Weiterhin ist es zweckmäßig, aus wenigstens zwei der so ermittelten Linkdistanzwerte, besonders bevorzugt aus allen so ermittelten Linkdistanzwerten, den Pfaddistanzwert zu ermitteln.

In einer vorteilhaften Ausgestaltung und Weiterbildung der Erfindung wird bei der Ermittlung des Pfaddistanzwertes zusätzlich eine Anzahl von Links des Pfades berücksichtigt. Hieraus ergibt sich der Vorteil, dass kürzere Pfade bevorzugt gegenüber längeren Pfaden werden.

In einer weiteren vorteilhaften Ausgestaltung und Weiterbildung der Erfindung wird der Linkdistanzwert basierend auf einer zweiten Wahrscheinlichkeit dafür, dass ein Datenpaket bei einer Übertragung über den Link erfolgreich übertrage wird, ermittelt.

Bevorzugt wird der Linkdistanzwert auf Grundlage einer ersten Datenpaketankunftsrate, die in die zweite Wahrscheinlichkeit eingeht, für eine erste Übertragungsrichtung des Links ermittelt. In einer besonders bevorzugten Ausgestaltung wird der Linkdistanzwert zusätzlich oder alternativ auf Grundlage einer zweiten Datenpaketankunftsrate, die in die zweite Wahrscheinlichkeit eingeht, für eine der ersten Übertragungsrichtungen entgegengesetzte zweite Übertragungsrichtung des Links ermittelt. Die erste und zweite Datenpaketankunftsrate geben hier jeweils im Wesentlichen eine Häufigkeit an, mit der eine über den Link in der jeweiligen Übertragungsrichtung gesendeten Nachricht von ihrem Ziel empfangen wird.

Bevorzugt wird der Linkdistanzwert auf Grundlage eines ersten Produktes aus der ersten und zweiten Datenpaketankunftsrate ermittelt. Weiterhin werden bevorzugt wenigstens zwei Linkdistanzwerte ermittelt und der Pfaddistanzwert auf Grundlage eines zweiten Produktes aus den Linkdistanzwerten ermittelt.

Zweckmäßig enthält das zweite Produkt einen zusätzlichen Faktor, der auf der Anzahl der Links des Pfades basiert.

Der Netzwerkknoten weist eine Verarbeitungseinrichtung zur Ermittlung eines Pfaddistanzwertes auf, die derart ausgestaltet ist, dass sie für einen Pfad eine Ermittlung eines ihm zugeordneten Pfaddistanzwertes durchführt, wobei der Pfaddistanzwert basierend auf einer ersten Wahrscheinlichkeit dafür, dass ein Datenpaket bei einer Übertragung entlang des Pfades bei wenigstens einem Link des Pfades mehrfach übertragen werden muss, ermittelt wird.

Das Netzwerk weist wenigstens einen solchen Netzwerkknoten auf.

Das Verfahren kann bspw. in einem Routing-Verfahren wie z.B. AODV zum Einsatz kommen.

Weitere Einzelheiten und Vorteile der Erfindung werden anhand von in der Zeichnung dargestellten Ausführungsbeispielen näher erläutert. Dabei zeigen

Figur 1 einen Netzwerkausschnitt aus drei Knoten;

Figur 2 ein schematisches Netzwerk mit drei Pfadkandidaten.

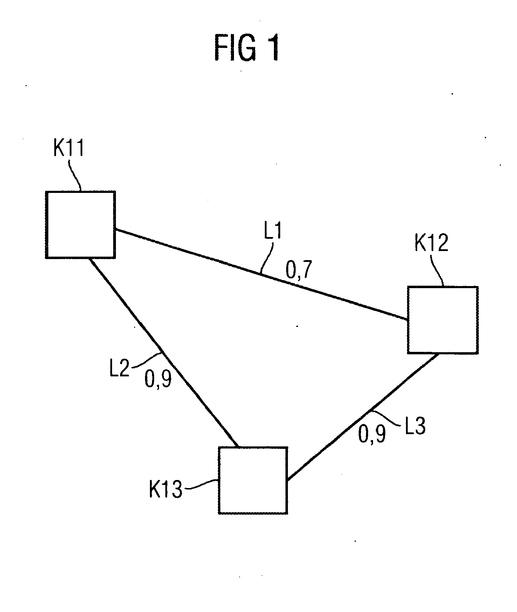

Figur 1 zeigt einen beispielhaften Netzwerkausschnitt, bestehend aus einem elften bis dreizehnten Knoten K11...13. Weiterhin zeigt Figur 1 einen ersten Link L1 zwischen dem elften Knoten K1 und dem zwölften Knoten K2, einen zweiten Link L2 zwischen dem elften Knoten K1 und dem dreizehnten Knoten K3 sowie einen dritten Link L3 zwischen dem zwölften Knoten K2 und dem dreizehnten Knoten K3. Der erste Link L1 weist eine Linkmetrik von 0,7 auf, während der zweite Link L2 und der dritte Link L3 jeweils eine Linkmetrik von 0,9 aufweisen.

Eine Datenübertragung vom elften Knoten K1 an den zwölften Knoten K2 kann in diesem beispielhaften Netzwerkausschnitt über zwei mögliche Pfade erfolgen. Der erste Pfad besteht aus dem ersten Link L1. Der zweite Pfad besteht aus dem zweiten Link L2 und dem dritten Link L3. Der erste Pfad führt somit direkt vom elften Knoten K1 zum zwölften Knoten K2, während der zweite Pfad vom elften Knoten K1 über den dreizehnten Knoten K3 zum zwölften Knoten K2 führt.

Die Routen-Metrik für einen Pfad wird in einer beispielhaften Ausführungsform der Routing-Metrik, d.h. der Ermittlung eines Pfaddistanzwertes für den Pfad, gemäß folgender Formel berechnet:

$$(1) \qquad R = \prod_{Links} LM = \prod_{Links} \left( D_f \times D_r \right)$$

wobei:

R Routen-Metrik
LM Linkmetrik
$D_f$ Datenpaketankunftsrate in einer ersten Übertragungsrichtung
$D_r$ Datenpaketankunftsrate in einer zweiten Übertragungsrichtung

Das bedeutet, die Routen-Metrik ist das Produkt aus den Linkmetriken, wobei die Linkmetriken wiederum das Produkt aus Datenpaketankunftsraten eines Links für beide Übertragungsrichtungen eines Links sind.

Die Routen-Metrik für den ersten Pfad ist in diesem Fall gleich der Linkmetrik für den ersten Link L1, also R = 0,7. Die Routen-Metrik für den zweiten Pfad ist in hier gleich dem Produkt aus den Linkmetriken für den zweiten Link L2 und den dritten Link L3. Das heißt, die Routen-Metrik für den zweiten Pfad ist R = 0,9 x 0,9 = 0,81.

Der zweite Pfad weist somit die deutlich geringere Wahrscheinlichkeit für eine wiederholte Übertragung eines Datenpakets bei wenigstens einem seiner Links auf, nämlich 19%. Ein Routing-Protokoll, das auf dieser beispielhaften Ausführungsform der Routing-Metrik basiert, würde hierbei den zweiten Pfad als Pfad auswählen, da dieser geeigneter für zeitkritische Datenübertragungen ist.

Bei der beispielhaften Routing-Metrik ist es möglich, dass ein sehr langer Pfad mit einer Länge von bspw. 10 Links eine bessere Routen-Metrik aufweist als ein weiterer Pfad mit nur zwei Links. In weiteren beispielhaften Ausführungsmöglichkeiten der Routing-Metrik wird deshalb die eine der folgenden Formeln verwendet:

$$(2) \qquad R = \prod_{Links} LM = \prod_{Links} \left( D_f \times D_r \times P \right)$$

oder

$$(3) \qquad R = \prod_{Links} LM = \left[ \prod_{Links} \left( D_f \times D_r \right) \right] \times P^{Links-1}$$

wobei:

P       Bestrafungsfaktor
Links    Anzahl der Links

Hierbei wird ein Bestrafungsfaktor eingeführt, der zweckmäßig zwischen 0 und 1 liegt, bevorzugt zwischen 0,6 und 0,95. In der zweiten Formel (2) wird der Bestrafungsfaktor der Linkmetrik zumultipliziert. In der dritten Formel (3) wird der Bestrafungsfaktor, potenziert mit der um 1 verringerten Anzahl der Links der Routen-Metrik zumultipliziert.

In einer beispielhaften Ausführungsmöglichkeit der Routing-Metrik gemäß der zweiten Formel (2) wird als Bestrafungsfaktor P = 0,8 gewählt. Damit ergeben sich für den Netzwerkausschnitt gemäß Figur 1 die folgenden Routen-Metriken:

-    für den ersten Pfad R = 0,7 x 0,8 = 0,56;
-    für den zweiten Pfad R = 0,9 x 0,8 x 0,9 x 0,8 ≈ 0,52.

Bei dieser Ausführungsform der Routing-Metrik würde also bereits der erste Pfad dem zweiten Pfad aufgrund der größeren Länge des zweiten Pfades vorgezogen werden.

Weitere Ausführungsvarianten der Routing-Metrik ergeben sich anhand der folgenden vierten und fünften Formel:

$$(4) \qquad R = \prod_{Links} LM = \prod_{Links} \left( D_r^2 \times P \right)$$

$$(5) \qquad R = \prod_{Links} LM = \left[ \prod_{Links} \left( D_r \right) \right] \times P^{Links-1}$$

Bei diesen Varianten wird lediglich die Datenpaketankunftsrate in der zweiten Übertragungsrichtung verwendet. Bei einer Variante wird diese quadriert.

Es ist möglich, die verschiedenen Möglichkeiten gemäß der zweiten und dritten Formel, den Bestrafungsfaktor in die Berechnung einzubringen, und die verschiedenen Möglichkeiten, die Datenpaketankunftsraten zu verwenden zu vermischen.

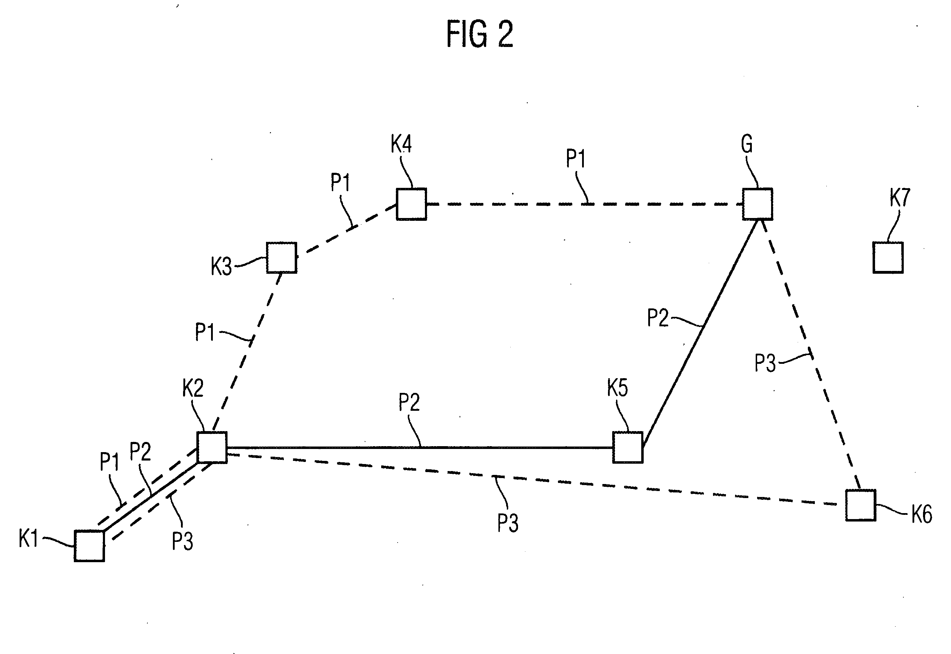

Im Folgenden soll die Anwendung einer Ausführungsform der erfindungsgemäßen Routing-Metrik in einem Routing-Verfahren gezeigt werden. Dabei wird das in Figur 2 gezeigte Ad-hoc-Netzwerk zugrunde gelegt. Das Ad-hoc-Netzwerk enthält einen ersten bis siebten Knoten K1...7 und ein Gateway G.

In diesem Beispiel möchte der erste Knoten K1 eine Nachricht an das Gateway G senden. Es wird für dieses Beispiel davon ausgegangen, dass keiner der Knoten K1...7 einen Pfad zum Gateway G kennt und deshalb ein solcher Pfad vollständig ermittelt werden muss.

Zur Ermittlung des Pfades wird das Routing-Protokoll AODV (Ad-hoc On-Demand Distance Vector) verwendet. AODV sieht vor, dass der erste Knoten K1 eine sog. Route-Request-Nachricht per Broadcast an weitere Knoten in seiner Umgebung sendet. Diese wiederum leiten die Route-Request-Nachricht weiter. Eine Route wird bestimmt, wenn der RREQ das Ziel erreicht. Diese Route wird per sog. Route-Reply-Nachricht per Unicast zurück an den Ursprung der Route-Request-Nachricht, d.h. an den ersten Knoten K1 geschickt. Dazu hat jeder Knoten K1...7, der die Anfrage empfangen und weitergeleitet hat, den Knoten K1...7 gespeichert, von dem er die Route-Request-Nachricht erhalten hat.

Auf diese Weise ergeben sich in diesem Beispiel beim ersten Knoten K1 drei Pfadkandidaten P1...3, entlang derer die Nachricht von diesem an das Gateway G übermittelt werden kann. Der erste Pfadkandidat P1 führt dabei vom ersten Knoten K1 über den zweiten, dritten und vierten Knoten K2, 3, 4 zum Gateway G. Der zweite Pfadkandidat P2 führt vom ersten Knoten K1 über den zweiten und fünften Knoten K2, 5 zum Gateway G. Der dritte Pfadkandidat P3 führt vom ersten Knoten K1 über den zweiten und sechsten Knoten K2, 6 zum Gateway G. Der siebte Knoten K7 kommt in diesem Beispiel in keinem der Pfadkandidaten P1...3 vor.

Um die Pfadkandidaten P1...3 an den ersten Knoten K1 zu übermitteln, werden nun Route-Reply-Nachrichten entlang der Pfadkandidaten zurück an den ersten Knoten K1 gesendet. So sendet das Gateway G eine Route-Reply-Nachricht für den ersten Pfadkandidaten P1 an den vierten Knoten K4. Dieser sendet eine Route-Reply-Nachricht an den dritten Knoten K3. Der wiederum sendet eine Route-Reply-Nachricht an den zweiten Knoten K2, der eine Route-Reply-Nachricht an den ersten Knoten K1 sendet.

Beim Empfang einer Route-Reply-Nachricht ermittelt der empfangende Knoten K1...7 jeweils eine Routenmetrik für den jeweiligen Pfadkandidaten P1...3. Diese bezieht sich dabei auf den Teil des Pfadkandidaten P1...3 vom Ziel, d.h. in diesem Beispiel dem Gateway G bis zum jeweiligen Knoten K1...7. Die Routenmetrik wird dann in der Route-Reply-Nachricht weitergegeben, sodass der erste Knoten K1 schließlich die gesamte Routenmetrik für jeden der Pfadkandidaten P1...3 bestimmen kann.

Als Routing-Metrik, d.h. als Vorschrift zur Ermittlung der Qualität eines Pfadkandidaten P1...3 kommt hierbei eine Routenmetrik zum Einsatz, bei der als Linkmetrik eine Datenpaketankunftsrate verwendet wird. Diese wiederum wird von den Knoten K1...7 aus sog. Hello-Nachrichten oder Metrik-Nachrichten ermittelt, die in regelmäßigen zeitlichen Abständen versendet werden. Hat der fünfte Knoten K5 bspw. vom Gateway G von den letzten m Hello-Nachrichten die letzten n empfangen, so bestimmt er die Datenpaketankunftsrate bzgl. des Links zwischen sich und dem Gateway G zu n/m. Aus den Linkmetriken der Links wird die Routenmetrik wiederum durch das Produkt der Linkmetriken bestimmt. Hierbei wird für jeden

Link ein Bestrafungsfaktor in das Produkt aufgenommen, sodass sich als Formel für die Routenmetrik ergibt:

$$(6) \qquad R = \prod_{Links} LM = \prod_{Links} (D \cdot P)$$

R       Routenmetrik
LM     Linkmetrik
D       Datenpaketankunftsrate
P       Bestrafungsfaktor
Links    Anzahl der Links des Pfadkandidaten P1...3

In diesem beispielhaften Routing-Verfahren wird als Bestrafungsfaktor 0,8 verwendet. Nun vergleicht jeder Knoten K1...7, der eine Route-Reply-Nachricht empfängt, die Routenmetrik des jeweiligen Pfadkandidaten P1...3 mit einem Schwellwert. Der Schwellwert soll hierbei 0,2 betragen. Unterschreitet die bei einem Knoten K1...7 ermittelte Routenmetrik des jeweiligen Pfadkandidaten P1...3 den Schwellwert, so wird der jeweilige Pfadkandidaten P1...3 verworfen. Das bedeutet, der Knoten K1...7 sendet keine Route-Reply-Nachricht in Bezug auf den jeweiligen Pfadkandidaten P1...3 mehr weiter. Dadurch erreicht der verworfene Pfadkandidat P1...3 nicht den ersten Knoten K1 und kann somit auch nicht zur Übermittlung der Nachricht an das Gateway G verwendet werden. Auch der erste Knoten K1 selbst vergleicht die Routenmetrik eines ihm per Route-Reply-Nachricht übermittelten Pfadkandidaten P1...3 mit dem Schwellwert und verwirft den Pfadkandidaten P1...3, falls seine Routenmetrik den Schwellwert erreicht oder unterschreitet.

Aus den nicht verworfenen Pfadkandidaten P1...3 wählt der erste Knoten K1 zuletzt denjenigen Pfadkandidaten mit der besten, d.h. höchsten Routenmetrik.

Für die einzelnen Pfadkandidaten P1...3 ergibt sich aus dem angegebenen Schema der im Folgenden beschriebene Verlauf. Für die Linkmetriken werden hier jeweils beispielhafte Werte angenommen, die in der folgenden Tabelle zusammengefasst sind:

| Link zwischen: | Linkmetrik: |
|---|---|
| Gateway G, vierter Knoten K4 | 0,8 |
| Gateway G, fünfter Knoten K5 | 0,9 |
| Gateway G, sechster Knoten K6 | 0,6 |
| vierter Knoten K4, dritter Knoten K3 | 0,7 |
| dritter Knoten K3, zweiter Knoten K2 | 0,9 |
| zweiter Knoten K2, erster Knoten K1 | 0,9 |
| fünfter Knoten K5, zweiter Knoten K2 | 1 |
| sechster Knoten K6, zweiter Knoten K2 | 0,5 |

Beim ersten Pfadkandidaten P1 wird eine Route-Reply-Nachricht vom Gateway G an den vierten Knoten K4 gesendet. Dieser berechnet die Routenmetrik für den bisherigen ersten Pfad zu dem Produkt aus der Linkmetrik für diesen Link und dem Bestrafungsfaktor, also 0,8*0,8 = 0,64. Der Pfadkandidaten P1 wird daraufhin nicht verworfen, da seine Routenmetrik größer als 0,2 ist. Im Folgenden geht eine Route-Reply-Nachricht vom vierten Knoten K4 an den dritten Knoten K3. Dieser berechnet die Routenmetrik aus dem Produkt der bisherigen Routenmetrik und der Linkmetrik für den Link zwischen sich und dem vierten Knoten K4 sowie dem Bestrafungsfaktor, also 0,64*0,8*0,7 = 0,36. Nach einer Route-Reply-Nachricht an den zweiten Knoten K2 berechnet dieser die Routenmetrik zu 0,36*0,8*0,9 = 0,26. Der erste Knoten K1 berechnet nach der letzten Route-Reply-Nachricht die Routenmetrik zu 0,26*0,8*0,9 = 0,19. Der erste Pfadkandidat P1 wird also beim ersten Knoten K1 verworfen, da seine Routenmetrik dort kleiner als 0,2 ist.

Mit der gleichen Vorgehensweise ergibt sich beim zweiten Pfadkandidaten P2 beim fünften, zweiten und ersten Knoten je eine Routenmetrik von 0,72 bzw. 0,58 bzw. 0,41. Beim dritten Pfadkandidaten P3 ergeben sich Routenmetriken von 0,48 und 0,19 beim sechsten Knoten K6 bzw. beim zweiten Knoten K2. Der dritte Pfadkandidat P3 wird also bereits beim zweiten Knoten K2 verworfen, da bereits dort seine Routenmetrik kleiner als der Schwellwert von 0,2 ist. Der dritte Pfadkandidat P3 erreicht daher nicht den ersten Knoten K1.

In diesem Beispiel wird der erste Knoten daher den zweiten Pfadkandidaten P2, der als Einziger eine geeignete Routenmetrik aufweist, zur Übertragung der Nachricht an das Gateway G wählen.

Eine alternative Ausführungsform des Routing-Verfahrens ergibt sich dadurch, dass die Linkmetriken bereits mit den Route-Request-Nachrichten übermittelt werden. Diese Ausführungsform des Routing-Verfahrens ermöglicht es bereits dem Gateway G, eine Entscheidung über den Pfad zu treffen.

**Patentansprüche**

1.  Verfahren zur Ermittlung eines Pfaddistanzwertes für einen Pfad, wobei der Pfaddistanzwert basierend auf einer ersten Wahrscheinlichkeit dafür, dass ein Datenpaket bei einer Übertragung entlang des Pfades bei wenigstens einem Link mehrfach übertragen werden muss, ermittelt wird und wobei folgende Schritte durchgeführt werden:

    - Ermittlung einer ersten und zweiten Datenpaketankunftsrate als Verhältnis zwischen einer an einem Knoten (K1...7) eines Links empfangenen Anzahl und einer von dem anderen Knoten des Links gesendeten Anzahl von Metrik-Nachrichten;
    - Ermittlung von jeweils einem in die erste Wahrscheinlichkeit eingehenden Linkdistanzwert für wenigstens einen Link (L1...3) des Pfades;
    - Ermittlung des Pfaddistanzwertes aus dem Linkdistanzwert;
    - wobei der Linkdistanzwert basierend auf einer zweiten Wahrscheinlichkeit dafür, dass ein Datenpaket bei einer Übertragung über den Link (L1...3) erfolgreich übertragen wird, ermittelt wird, wobei der Linkdistanzwert auf Grundlage der ersten Datenpaketankunftsrate, die in die zweite Wahrscheinlichkeit eingeht, für eine erste Übertragungsrichtung des Links (L1...3) ermittelt wird und wobei der Linkdistanzwert zusätzlich oder alternativ auf Grundlage der zweiten Datenpaketankunftsrate, die in die zweite Wahrscheinlichkeit eingeht, für die der ersten Übertragungsrichtung entgegen gesetzte zweite Übertragungsrichtung des Links (L1...3) ermittelt wird,

    **dadurch gekennzeichnet, dass** ein bei einem Knoten des Links (L1...3) ermittelter Pfaddistanzwert eines bisherigen Pfads vom Ziel des Pfads zum Knoten des Links (L1...3) mit einem Schwellwert verglichen wird, und dass für den Fall, dass der bei dem Knoten des Links (L1...3) ermittelte Pfaddistanzwert den Schwellwert unterschreitet, die Ermittlung des Pfaddistanzwertes für den Pfad abgeschlossen und der Pfad verworfen wird.

2. Verfahren nach Anspruch 1, wobei bei der Ermittlung des Pfaddistanzwertes zusätzlich eine Anzahl von Links (L1...3) des Pfades berücksichtigt wird.

3. Verfahren nach Anspruch 1 oder 2, wobei der Linkdistanzwert auf Grundlage eines ersten Produktes aus der ersten und der zweiten Datenpaketankunftsrate ermittelt wird.

4. Verfahren nach einem der Ansprüche 1 bis 3, wobei wenigstens zwei Linkdistanzwerte ermittelt werden und der Pfaddistanzwert auf Grundlage eines zweiten Produktes aus den Linkdistanzwerten ermittelt wird.

5. Verfahren nach Anspruch 4, wobei das zweite Produkt einen zusätzlichen Faktor enthält, der auf der Anzahl der Links des Pfades basiert.

6. Netzwerkknoten (K1...7,11...13) mit einer Verarbeitungseinrichtung zur Ermittlung eines Pfaddistanzwertes für den Netzwerkknoten, der im Betrieb einen Knoten eines Links darstellt, wobei die Verarbeitungseinrichtung derart ausgestaltet ist, dass sie für einen Pfad eine Ermittlung eines ihm zugeordneten Pfaddistanzwertes unter Berücksichtigung einer ersten und zweiten Datenpaketankunftsrate als Verhältnis zwischen einer an einen Knoten des Links (L1...3) empfangenen Anzahl und einer von dem anderen Knoten des Links (L1...3) gesendeten Anzahl von Metrik-Nachrichten durchführt, wobei:

   - der Pfaddistanzwert basierend auf einer ersten Wahrscheinlichkeit dafür, dass ein Datenpaket bei einer Übertragung entlang des Pfades bei dem Link (L1...3) des Pfades mehrfach übertragen werden muss, ermittelt wird;
   - jeweils einer in die erste Wahrscheinlichkeit eingehender Linkdistanzwert für den Link (L1...3) des Pfades ermittelt wird;
   - der Pfaddistanzwert aus dem Linkdistanzwert ermittelt wird;
   - der Linkdistanzwert basierend auf einer zweiten Wahrscheinlichkeit dafür, dass ein Datenpaket bei einer Übertragung über den Link (L1...3) erfolgreich übertragen wird, ermittelt wird, wobei der Linkdistanzwert auf Grundlage der ersten Datenpaketankunftsrate, die in die zweite Wahrscheinlichkeit eingeht, für eine erste Übertragungsrichtung des Links (L1...3) ermittelt wird und wobei der Linkdistanzwert zusätzlich oder alternativ auf Grundlage der zweiten Datenpaketankunftsrate, die in die zweite Wahrscheinlichkeit eingeht, für die der ersten Übertragungsrichtung entgegen gesetzte zweite Übertragungsrichtung des Links (L1...3) ermittelt wird,

   **dadurch gekennzeichnet, dass**
   ein bei dem Netzwerkknoten ermittelter Pfaddistanzwert eines bisherigen Pfads vom Ziel des Pfads zum Netzwerkknoten mit einem Schwellwert verglichen wird, und dass für den Fall, dass der bei dem Netzwerkknoten ermittelte Pfaddistanzwert den Schwellwert unterschreitet, die Ermittlung des Pfaddistanzwertes für den Pfad abgeschlossen und der Pfad verworfen wird.

7. Netzwerk mit wenigstens einem Netzwerkknoten (K1...7,11...13) nach Anspruch 6.

8. Verwendung des Pfaddistanzwertes nach einem der Ansprüche 1 bis 5 in einem Routing-Verfahren.

**Claims**

1. Method for determining a path distance value for a path, wherein the path distance value is determined on the basis of a first probability that, during a transmission along the path, a data packet must be transmitted several times at at least one link and wherein the following steps are carried out:

   - determination of a first and second data packet arrival rate as a ratio between a number of links received at a node (K1...7) and a number of metric messages sent from the other node of the link;
   - determination in each case of a link distance value included in the first probability for at least one link (L1...3) of the path;
   - determination of the path distance value from the link distance value;
   - wherein the link distance value is determined on the basis of a second probability that a data packet will be successfully transmitted during a transmission via the link (L1...3), wherein the link distance value is determined for a first transmission direction of the link (L1...3) on the basis of the first data packet arrival rate that is included in the second probability, and wherein the link distance value is additionally or alternatively determined for the second transmission direction of the link (L1...3) that is opposite to the first transmission direction on the basis of the second data packet arrival rate that is included in the second probability,

**characterised in that** the path distance value of a previous path from the destination of the path to the node of the link (L1...L3) determined at a node of the link (L1...3) is compared with a threshold value, and that in the event that the path distance value determined at a node of the link (L1...3) undershoots the threshold, the determination of the path distance value for the path is concluded and the path is rejected.

2. Method according to claim 1, wherein a number of links (L1...3) of the path are additionally taken into consideration in the determination of the path distance value.

3. Method according to claim 1 or 2, wherein the link distance value is determined on the basis of a first product of the first and second data packet arrival rate.

4. Method according to one of the claims 1 to 3, wherein at least two link distance values are determined and the path distance value is determined on the basis of a second product of the link distance values.

5. Method according to claim 4, wherein the second product contains an additional factor which is based on the number of links of the path.

6. Network nodes (K1...7, 11...13) with a processing device for determining a path distance value for the network nodes, which represents a node of a link in operation, wherein the processing device is configured in such a way that, for one path, it makes a determination of a path distance value assigned to it, taking into consideration a first and second data packet arrival rate as a ratio between a number received at a node of the link (L1...3) and a number of metric messages sent from the other node of the link (L1...3), wherein:

- the path distance value is determined on the basis of a first probability that, during a transmission along the path, a data packet must be transmitted several times at the link (L1...3) of the path;
- in each case a link distance value included in the first probability is determined for the link (L1...3) of the path;
- the path distance value is determined from the link distance value;
- the link distance value is determined on the basis of a second probability that a data packet will be successfully transmitted during a transmission via the link (L1...3), wherein the link distance value is determined for a first transmission direction of the link (L1...3) on the basis of the first data packet arrival rate that is included in the second probability, and wherein the link distance value is additionally or alternatively determined for the second transmission direction of the link (L1...3) that is opposite to the first transmission direction on the basis of the second data packet arrival rate that is included in the second probability,

**characterised in that**

a path distance value of a previous path from the destination of the path to the network node determined at the network node is compared with a threshold value, and that in the event that the path distance value determined at the network node undershoots the threshold, the determination of the path distance value for the path is concluded and the path is rejected.

7. Network with at least one network node (K1...7, 11...13) according to claim 6.

8. Use of the path distance value in a routing method according to one of the claims 1 to 5.

**Revendications**

1. Procédé pour déterminer une valeur de distance de chemin pour un chemin, la valeur de distance de chemin étant déterminée sur la base d'une première probabilité qu'un paquet de données, lors d'une transmission le long du chemin, doive être transmis plusieurs fois au niveau d'au moins un lien, et les étapes suivantes étant exécutées :

- détermination d'un premier et d'un deuxième taux d'arrivée de paquets de données en tant que rapport entre un nombre de messages métriques reçus au niveau d'un noeud (K1 ... 7) d'un lien et un nombre de messages métriques émis par l'autre noeud du lien ;

- détermination, pour au moins un lien (L1 ... 3) du chemin, de respectivement une valeur de distance de lien intervenant dans la première probabilité ;
- détermination de la valeur de distance de chemin à partir de la valeur de distance de lien ;
- la valeur de distance de lien étant déterminée sur la base d'une deuxième probabilité qu'un paquet de données soit transmis avec succès lors d'une transmission via le lien (L1 ... 3), la valeur de distance de lien étant déterminée, pour un premier sens de transmission du lien (L1 ... 3), sur la base du premier taux d'arrivée de paquets de données qui intervient dans la deuxième probabilité et la valeur de distance de lien étant déterminée, additionnellement ou alternativement, pour le deuxième sens de transmission du lien (L1 ... 3) opposé au premier sens de transmission, sur la base du deuxième taux d'arrivée de paquets de données qui intervient dans la deuxième probabilité,

**caractérisé en ce que**
une valeur de distance de chemin d'un chemin considéré jusqu'à présent de la destination du chemin vers le noeud du lien (L1 ... 3) déterminée en un noeud du lien (L1 ... 3) est comparée avec une valeur seuil et **en ce que**, si la valeur de distance de chemin déterminée au niveau du noeud du lien (L1 ... 3) tombe en dessous de la valeur seuil, la détermination de la valeur de distance de chemin pour le chemin est terminée et le chemin est rejeté.

**2.** Procédé selon la revendication 1, un nombre de liens (L1 ... 3) du chemin étant additionnellement pris en compte lors de la détermination de la valeur de distance de chemin.

**3.** Procédé selon la revendication 1 ou 2, la valeur de distance de chemin étant déterminée sur la base d'un premier produit obtenu à partir du premier et du deuxième taux d'arrivée de paquets de données.

**4.** Procédé selon l'une des revendications 1 à 3, au moins deux valeurs de distance de lien étant déterminées et la valeur de distance de chemin étant déterminée sur la base d'un deuxième produit résultant des valeurs de distance de lien.

**5.** Procédé selon la revendication 4, le deuxième produit contenant un facteur additionnel qui est basé sur le nombre des liens du chemin.

**6.** Noeud de réseau (K1 ... 7, 11 ... 13) avec un dispositif de traitement pour déterminer une valeur de distance de chemin pour le noeud de réseau qui, en cours de service, constitue un noeud d'un lien, le dispositif de traitement étant réalisé de manière telle qu'il effectue une détermination, pour un chemin, d'une valeur de distance de chemin y associée compte tenu d'un premier et d'un deuxième taux d'arrivée de paquets de données en tant que rapport entre un nombre de messages métriques reçus au niveau d'un noeud du lien (L1 ... 3) et un nombre de messages métriques émis par l'autre noeud du lien (L1 ... 3),

- la valeur de distance de chemin étant déterminée sur la base d'une première probabilité qu'un paquet de données doive être transmis plusieurs fois au niveau du lien (L1 ... 3) du chemin lors d'une transmission le long du chemin ;
- respectivement une valeur de distance de lien intervenant dans la première probabilité étant déterminée pour le lien (L1 ... 3) du chemin ;
- la valeur de distance de chemin étant déterminée à partir de la valeur de distance de lien ;
- la valeur de distance de lien étant déterminée sur la base d'une deuxième probabilité qu'un paquet de données soit transmis avec succès lors d'une transmission via le lien (L1 ... 3), la valeur de distance de lien étant déterminée pour un premier sens de transmission du lien (L1 ... 3) sur la base du premier taux d'arrivée de paquets de données qui intervient dans la deuxième probabilité et la valeur de distance de lien étant déterminée, additionnellement ou alternativement, pour le deuxième sens de transmission du lien (L1 ... 3) opposé au premier sens de transmission sur la base du deuxième taux d'arrivée de paquets de données qui intervient dans la deuxième probabilité,

**caractérisé en ce que**
une valeur de distance de chemin d'un chemin considéré jusqu'à présent de la destination du chemin vers le noeud de réseau déterminée au niveau du noeud de réseau est comparée avec une valeur seuil et **en ce que**, si la valeur de distance de chemin déterminée au niveau du noeud de réseau tombe en dessous de la valeur seuil, la détermination de la valeur de distance de chemin pour le chemin est terminée et le chemin est rejeté.

**7.** Réseau comportant au moins un noeud de réseau (K1 ... 7, 11 ... 13) selon la revendication 6.

**8.** Utilisation de la valeur de distance de chemin selon l'une des revendications 1 à 5 dans un procédé de routage.

# FIG 1

# FIG 2

EP 1 999 899 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1617608 A